# EUROPEAN PATENT SPECIFICATION

(11) **EP 4 214 451 B1**
(45) Date of publication and mention of the grant of the patent: **21.10.2026**
(21) Application number: 21777355.5
(22) Date of filing: 20.09.2021
(51) Int. Cl.: F24F 13/22, G01F 23/26, F24F 1/0007, G04F 1/00

(54) **A LIQUID FILTER**
FLÜSSIGKEITSFILTER
FILTRE À LIQUIDE

(30) Priority: 21.09.2020 GB 202014853
(43) Date of publication of application: 26.07.2023
(73) Proprietor: Charles Austen Pumps Ltd., Byfleet West Byfleet Surrey KT14 7NY (GB)
(72) Inventor: COUGHLAN, Michael, Surrey KT14 7NY (GB); SHEPHERD, Bill, Surrey KT14 7NY (GB)
(74) Representative: Boult Wade Tennant LLP
(86) International application number: PCT/GB2021/052434
(87) International publication number: WO 2022/058752

(56) References cited:
- EP-A2- 0 997 712
- WO-A2-2009/089339
- GB-A- 2 531 291
- US-A1- 2009 071 181
- US-B2- 10 677 725

## Description

The present invention relates to a filter. It has been particularly designed for use with a condensate tray assembly for use below a condensate generating appliance. However, it can be used in any situation where a liquid is filtered and a measurement is required of the liquid level in the vicinity of the filter.

Such a condensate generating appliance may, for example, be a refrigeration unit, for example the type seen in supermarkets and the like or a boiler or air conditioning unit and the like.

In a refrigeration unit, typically a tray will be positioned below the appliance in order to catch any condensate generated by the appliance. The tray needs to be emptied regularly in order to prevent flooding. Typically this is done by having an high level sensor which will sense when the depth reaches a predetermined level. At this point, the pump will be driven in order to empty the tray until the level drops to a second level as determined by a low level sensor. This suffers from a problem that the low level sensor cannot reliably detect the level of the liquid very close to the bottom of the tray because of the effect of surface tension and contamination on the sensor. Further, the fact that the tray has a wide, shallow configuration means that a reasonable amount of liquid remains in the tray once the low level has been reached. This could be addressed by continuing to run the pump for a short period after the low level sensor is reached. However, it is difficult to estimate reliably how much time would be required as the rate of pumping of the pump will not be constant over time, for example if the pipe has begun to clog. Further, continuing to run the pump after the tray is empty, would generate an unpleasant noise.

As a result of this, in practice, a significant amount of liquid is left behind within the tray and the pump at the end of the pumping operation. This presents a hygiene hazard as microbial growth will occur in time within the tray and the pump. The present invention aims to provide a filter which can assist in addressing this problem which can also be used in other applications.

Relevant background art is disclosed in WO 2009/089339 A2, which relates to a fluid-characterisation sensor comprising electrodes on a printed circuit board; in EP 0 997 712 A2, which relates to a capacitive sensor arrangement using multilayer printed-circuit-board technology; in GB 2 531 291 A, which relates to a liquid level detector for use in a pump control system; in US 2009/0071181 A1, which relates to an evaporator unit comprising a reservoir, pump and filter for condensate liquid; and in US 10 677 725 B2, which relates to a sensor device for containers of liquid substances. According to the present invention there is provided a filter according to claim 1

Such an arrangement provides an integral component which is able to both filter the liquid and provide means of determining the liquid depth. The PCB is a cheap and simple way of achieving these dual aims. Capacitive sensors can readily be integrated into the PCB as it is simply a matter of forming a number of conductive tracks on the PCB. Capacitive sensors also undergo a continuous change of capacitance as the liquid level falls so can provide an accurate measurement as well as information on the rate of change of depth.

The capacitive sensor may be configured to measure the average depth of the liquid on both sides of the filter. In the event that the filter is blocked, the level might be high on one side of the filter and low on the other side of the filter and the sensor may be only be able to give a reading giving an intermediate value of depth. Therefore, preferably, the capacitive elements are shielded on one side such that they only measure the depth on one side of the filter. Thus, for example, the sensor can be configured to measure the liquid depth on the downstream side of the filter such that it can prevent the pump from being operated if the filter is clogged and the downstream side of the filter has been fully pumped out.

Preferably, the filter comprises a second set of capacitive elements formed on the printed circuit board forming a second capacitive sensor capable of measuring the depth of the liquid adjacent to the filter on a side opposite to the side measured by the first set of capacitive elements. This is preferably achieved by shielding the second set of capacitive elements, with a shield which is on the opposite side to the capacitive elements as compared to the shield for the first set of capacitive elements.

Thus, in a very simple manner which requires only that a number of additional tracks are printed onto the printed circuit board, a filter can be provided which a change of depth of the liquid on both sides of the filter.

Such an arrangement can now sense the rate of change of the liquid level on both sides of the filter element. This can provide additional diagnostic information to the controller as it is not only possible to determine the rate at which the tray is being emptied, but from a comparison of the rate of depth change on both sides of the filter it is also possible to determine information about the state of the filter which may have become blocked.

The printed circuit board preferably has an array of holes which decrease in size towards the bottom of the printed circuit board. This will filter out progressively smaller particles towards the bottom of the tray. The circuit board in the vicinity of the holes may be copper-plated. This provides the filter with anti-microbial properties and can be readily formed during the construction of the printed circuit board.

The sensor can be used in the above mentioned condensate tray. Because the sensor can determine the rate of change of the depth of the liquid, it is possible to make a much more accurate determination of how much longer a pump needs to be run for in order to empty the tray. Thus, if the efficiency of the pump has decreased, the rate of change will decrease accordingly and this can be allowed for in the calculation. Further, if paired with a self-priming pump, there is no need to leave any water in the pump at the end of the pumping operation.

Such an arrangement can now sense the rate of change of the liquid level on both sides of the filter element. This can provide additional diagnostic information to the controller as it is not only possible to determine the rate at which the tray is being emptied, but from a comparison of the rate of depth change on both sides of the filter it is also possible to determine information about the state of the filter which may have become blocked.

An example of a filter in accordance with the present invention will now be described with reference to the accompanying drawings, in which:
Fig. 1 is a schematic plan view of a tray assembly incorporating a filter;
Fig. 2 is a perspective view of the tray assembly;
Fig. 2A shows the detail of the filter in circle A of Fig. 2;
Fig. 3 is a cross-sectional view through the tray, in use;
Fig. 3A shows the detail in circle A in Fig. 3;
Fig. 4 is a cross section in a horizontal plane through the filter along line IV-IV in Fig. 2;
Fig. 5 is a perspective view of a refrigeration unit;
Fig. 6 is a plan view of the refrigeration unit;
Fig 6A is a cross section through line A-A in Fig. 6 showing a second tray assembly;
Fig 6B shows the detail in the circle B in Fig 6A;
Fig. 7 is a perspective view of a tray of the second tray assembly with various attachments:
   Fig. 8 is a front view of an air conditioning unit:
   Fig 8A is a cross section though line A-A in Fig. 8 shoeing a third tray assembly;
   Fig 8B shows the detail in the circle B in Fig 8A;
   Fig. 9 is a plan view of part of the tray and connections of the third tray assembly;
   Fig. 10 is a partial perspective view of the tray of third tray assembly and part of the air conditioning unit;
   Fig. 11 is a perspective view of a second filter in a different type of reservoir;
   Fig. 12 is a plan view of Fig.11;
   Fig. 13 is a front view of the second filter;
   Fig. 14 is a perspective view of a second air conditioning unit with the reservoir; and
   Fig. 14A shows the detail in the circle A in Fig 14.

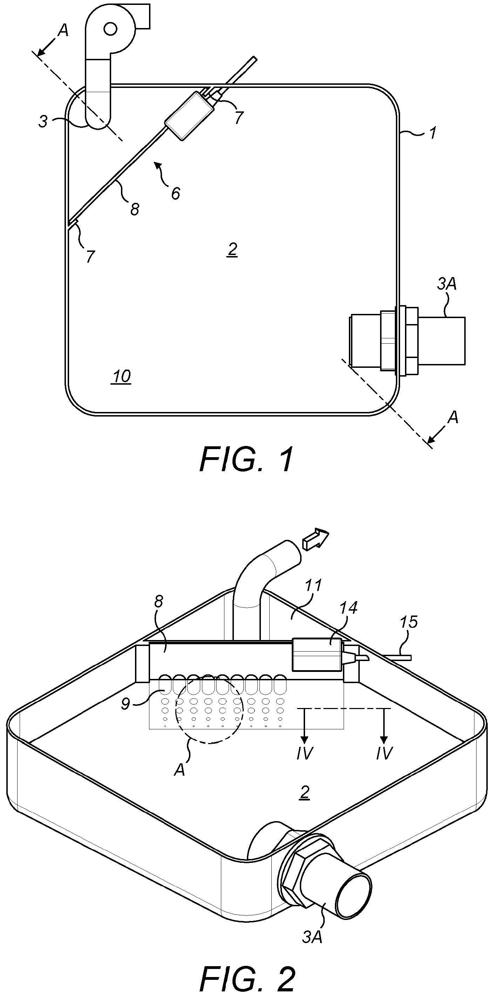

The assembly shown in Fig. 1 comprises a tray 1 having a wide shallow configuration with a floor 2 which slopes into one corner. In practice, the tray will be covered with a lid but this is not depicted in the drawings so that the internal arrangement of the tray can be seen. In this corner a discharge tube 3 is provided. In the diagonally opposite corner is an inlet 3A via which condensate enters the tray. The lowermost end 4 of the discharge tube 3 is positioned as closely as possible to the deepest part of the floor 2 while still being spaced sufficiently from the floor 2 to allow the entry of liquid through the lowermost end 4. A discharge tube 3 leads to a pump 5 as shown in Fig. 1.

This pump 5 is a self-priming pump, for example a reciprocating or rotary diaphragm pump or a peristaltic pump.

The filter assembly 6 is fitted across one corner of the tray 1 as shown in the figures. This is retained by a pair of lugs 7 which are moulded with the tray 1. The main body of the filter assembly 6 is provided by a printed circuit board 8 (PCB) which fits into the tray such that the edges of the seal form a generally fluid-tight seal with the tray. There may be some leakage around the edges of the printed circuit board, but the bulk of the fluid passes through an array of holes 9 in the PCB 8 forming the primary flow path from a main portion 10 of the tray to a discharge portion 11 on the opposite side of the tray.

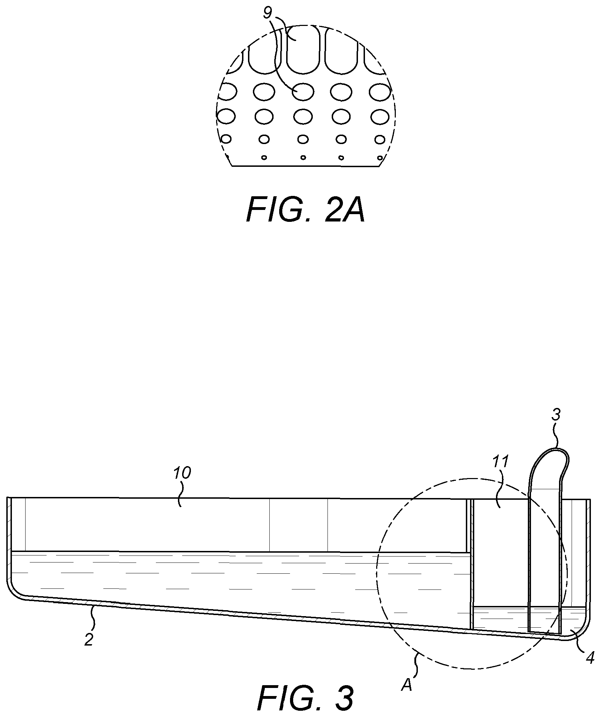

As can be seen in Fig. 2A, the size of the apertures within the PCB 8 increases with increasing depth within the tray thereby allowing the flow rate through the filter to increase at a disproportionally high rate, with increasing depth. During periods of relatively low flow, the PCB 8 can filter relatively small particles, while if the flow rate increases, large particles can be allowed to pass. The largest hole 9 is sized so that a particle which can pass through will not pass through the pump.

First 12 and second 13 capacitive sensors are integrated into the printed circuit board. With reference to Fig. 2, these capacitive sensors are positioned immediately below a control electronics enclosure 14 which houses the control circuitry for the sensors. A power line 15 leads from this enclosure 14.

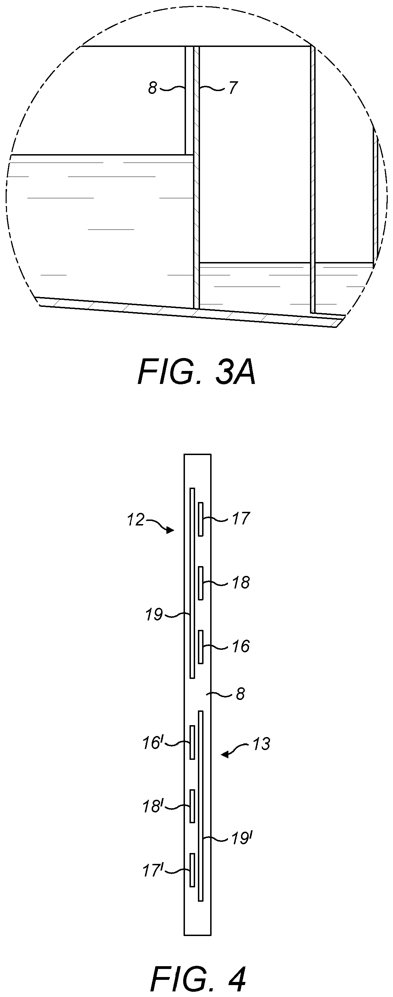

The first capacitive sensor 12 extends downwardly from the enclosure 14. As shown in Fig. 4, the first capacitive sensor 12 has a ground electrode 16 and a sensing electrode 17 which are formed within the PCB in the form of layers of a conductive material such as copper which extend vertically down away from the enclosure 14. A first shield 18 in the former of a further conductive layer is positioned between the two electrodes. A second shield 19 is formed as a layer of a conductive material positioned behind the electrodes 16, 17 and the first shield 18 as shown in Fig. 4. As a result of the shielding, the capacitance between electrodes 16, 17 will vary based on the capacitance of the medium which is to the right of the PCB 8 in Fig. 4. The shields 18, 19 will prevent or reduce the sensitivity of the electrodes to the capacitance through the PCB material or the medium present on the opposite side of the PCB. As such, the first capacitive sensor will measure the depth of the medium on the right-hand side of the PCB 8 as shown in Fig. 4.

The second capacitive electrode 13 shown in Fig. 4 is effectively the mirror image of the first capacitive sensor 12 as described above and the same components are designated with a similar reference numeral 16'-19' respectively.

The second capacitive sensor 13 is therefore sensitive to the depth of material on the left-hand side of the PCB 8 as shown in Fig. 4.

With reference to Fig. 3, this shows a high liquid depth in the main portion 10 shown in Fig. 3 and a low liquid depth in a discharge portion 11. This may happen towards the end of a pumping cycle if the filter is blocked to some extent such that the liquid passing through the PCB 8 is flowing at a lower rate than the rate at which the liquid is being pumped from a discharge part 11. In this situation, in the sensor as described in relation to Fig. 4, the main portion 10 is on the left-hand side of the PCB 8 and the discharge portion 11 is on the opposite side. For the first sensor 122 the majority of the depth the electrodes 16, 17 will be measuring the capacitance between the electrodes through the water. By contrast, the second capacitive sensor 13 will be measuring the capacitance between the electrodes 16', 17' largely through air. In between, at intermediate levels, the capacitance will vary between these two values at a continuous rate depending upon how much of each electrode is below the water.

Because these electrodes allow a rate of change of the depths to be determined, the control electronic is aware of how fast the liquid levels are changing on either side of the PCB. As such, the pump 5 can continue to operate until almost all of the liquid has been pumped out of the discharge portion 11. As can be seen in Fig. 3, the lower end of the pipe 4 is beneath the lower edge of the PCB 8. However, by extrapolating the rate of discharge, the liquid can continue to be pumped out even when the liquid level has dropped below the level of the printed circuit board 8.

This allows a very low level of liquid to be achieved in the tray. As the pump is a self priming pump, little of no residual liquid is left there too.

Also, by being aware of the rate of change of the liquid on either side of the PCB 8, the control electronics can determine not only how quickly the discharge portion 11 is being emptied, but also how efficiently the filter is working given the difference in the rate of change of the level on either side.

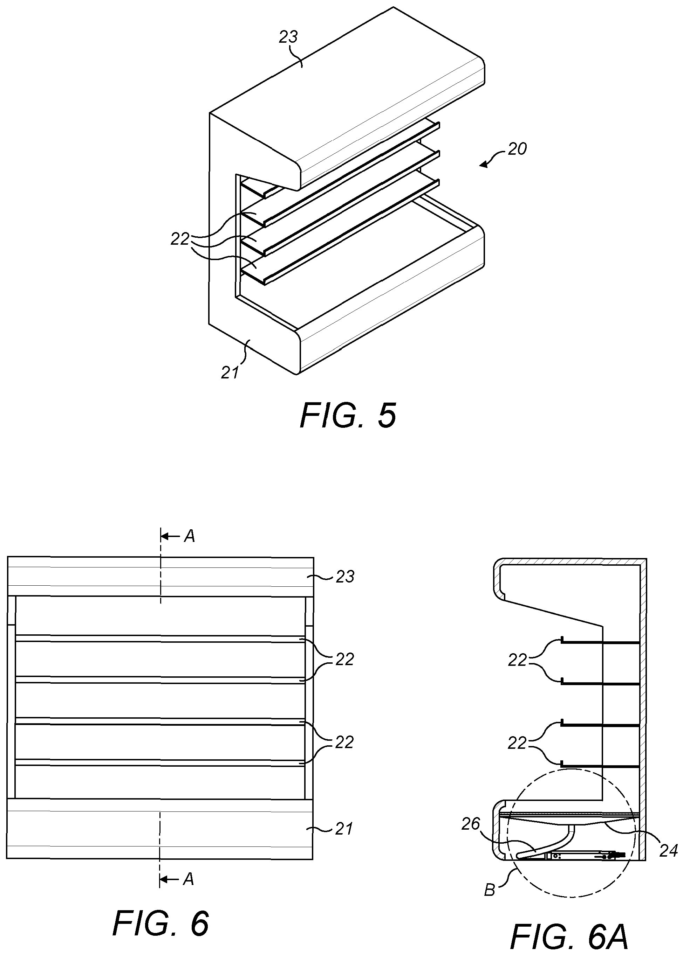

Figs. 5-7 show a refrigeration unit into which a filter assembly similar to that described above is incorporated.

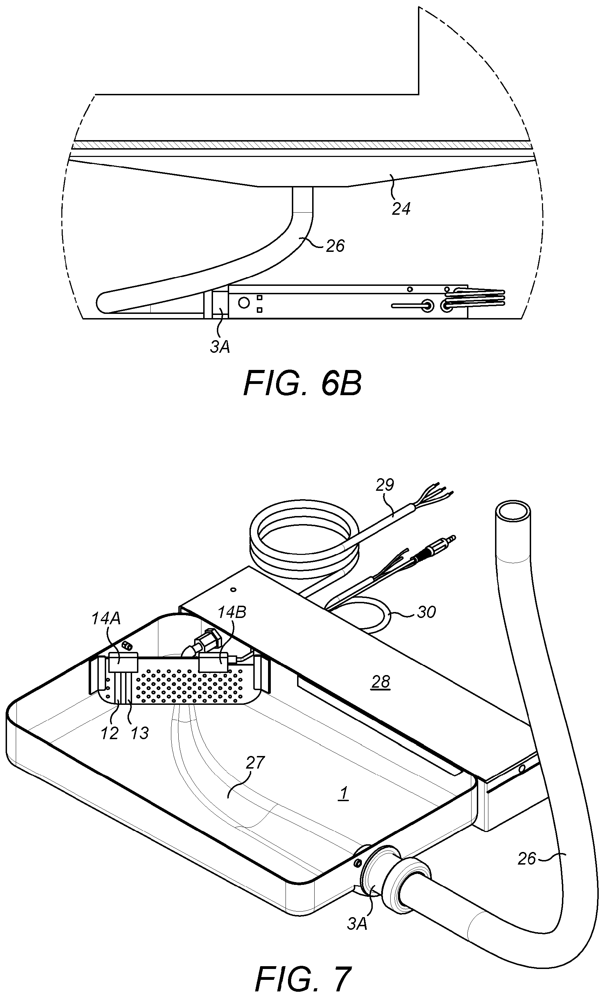

The refrigeration unit 20 shown in Figs. 5, 6 and 6A is the type of unit found in a supermarket. This comprises a base 21 having a number of shelves 22 and an upper portion 23.

Incorporated within the upper part of the base 21 is a collection plate 24 as best shown in Fig. 6B. This plate has a generally flat configuration which extends across the base 21 and has a gently sloping lower wall 25 which slopes towards a central opening for an outlet duct 26. This duct 26 leads to an inlet duct 3A on a condensate tray 1. The tray 1 is the same in most material respects as the tray described above in relation to Figs. 1-4 such that the same reference numerals have been used. Only the differences are described below.

The tray 1 has a channel 27 in its lower wall to facilitate the flow of the condensate towards the outlet. As shown in Fig. 7, the tray 1 protrudes from the plate 28 which forms part of the base 21 of the refrigeration unit 20. The tray 1 can be pushed back from the extended position shown in Fig. 7 further under the plate 28 until the inlet 3A abuts against the surrounding housing.

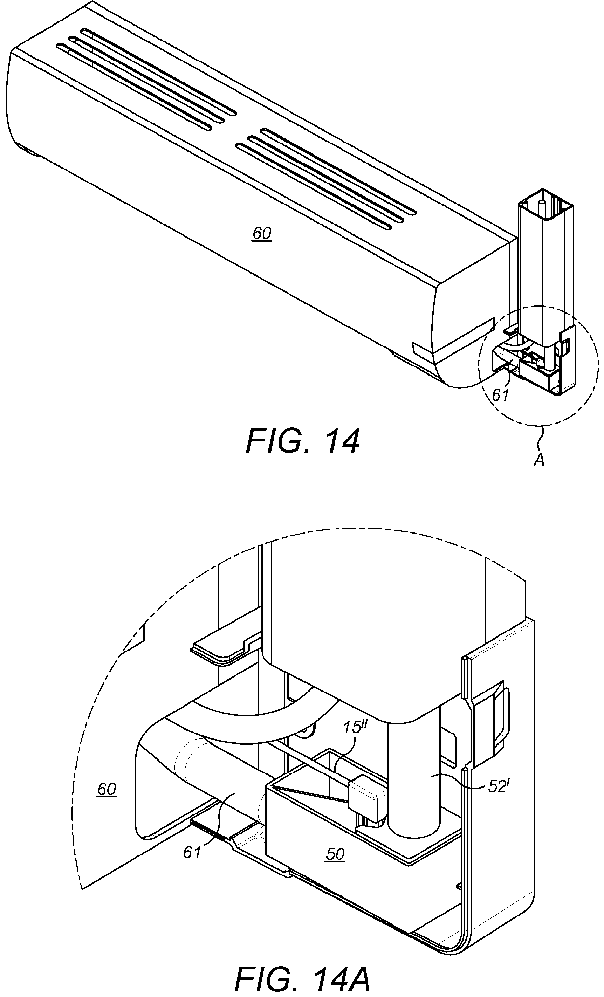

As shown in Fig. 7, the control electronics enclosure 14 is now in two parts 14A and 14B. 14A contains the connections necessary for the two capacitive sensors 12, 13 which are as described above. Fig. 14B contains the necessary external connections, for example to the power lead 29. Fig. 7 also depicts a second power lead 30 for the pump.

In use, condensate from the refrigeration unit 20 will flow under gravity into the collecting plate 24, along outlet duct 26 and into the tray 1 from which it will be pumped out of the inlet as described above in relation to the first example. The level sensing is as discussed above.

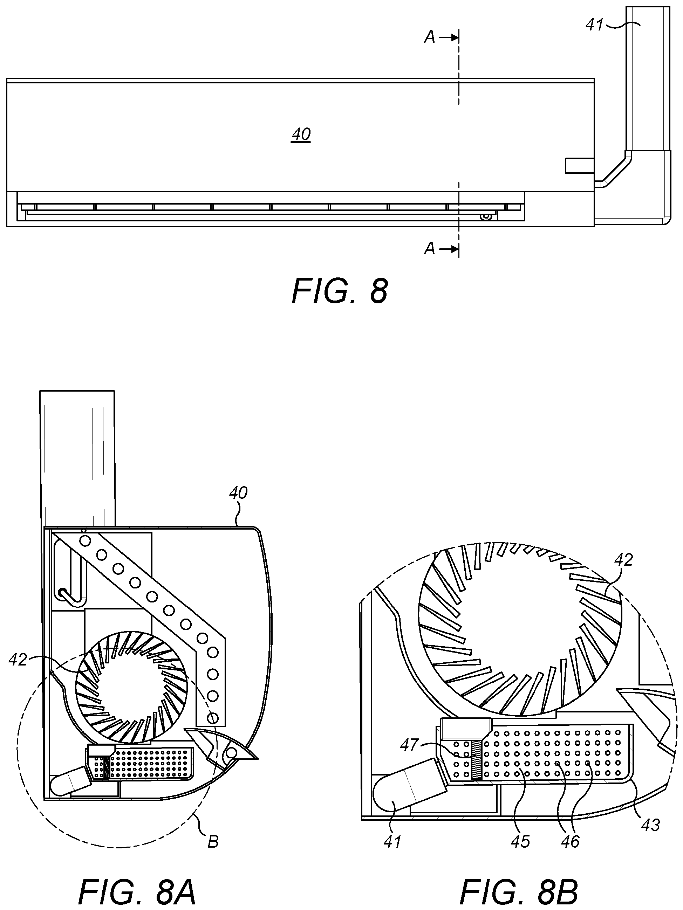

Figs. 8-10 show an example of a condensate tray assembly incorporating a filter. This time, the tray assembly is positioned beneath an air conditioning unit 40 rather than the refrigeration unit. The air conditioning unit 40 is a conventional wall-mounted unit having an outlet duct 41 via which the condensate is pumped out of the air conditioning unit. As shown in Figs. 8A and 8B, beneath the fan coil 42 is a condensate tray 43 to which the outlet duct 41 is connected via outlet orifice 44. Within the tray 43 is a filter assembly 45 which is formed in essentially the same manner as the filter assembly 6 described above. In particular, it is made from a PCB with a number of holes 46, the same capacitive sensor 47 and control electronics enclosure 48.

As before, the capacitive sensor allows the rate of change of the depth within the tray 43 to be determined so that the pump may be operated accordingly. This provides the advantages mentioned above in relation to the first two examples.

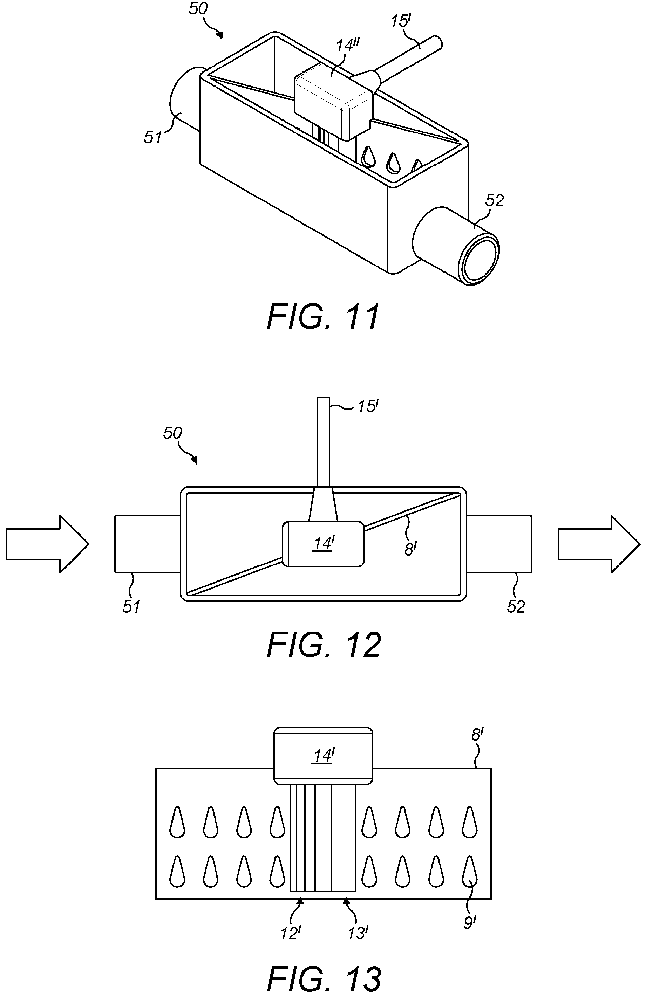

A second example of a filter is shown in Figs. 11-13. In this case, instead of the tray, there is a reservoir 50 which may, for example, be in any fluid line where a measurement of the depth is required.

In this case, there is an inlet 51 on one side of the reservoir 50 and an outlet 52 on the opposite side. A PCB 8' is provided diagonally across the reservoir to maximise the surface area of the filter. It could, however be in other orientations. The PCB 8' has a plurality of holes 9' which provide the filter screen. In this case, all of the apertures are the same size (but could be different sizes as before).

Fig. 13 shows the PCB with layers removed such that this shows a plane through one side of each of the sensors 12' and 13'. The first sensor 12' is designed to sense the liquid level on the side which the PCB 8' in Fig. 13 is facing. Thus, as shown in Fig. 4, there will be a shield (not visible in Fig.13) behind the three electrodes. The second capacitive sensor 13' senses the liquid level on the opposite side and has the three electrodes (not visible in Fig. 13) behind the shield. In this example, the control electronics enclosure 14' is in the centre of the PCB 8 and the power line 15' is connected accordingly as shown in Figs. 11 and 12. Otherwise, the filter and the sensor function as described above in relation to the first example.

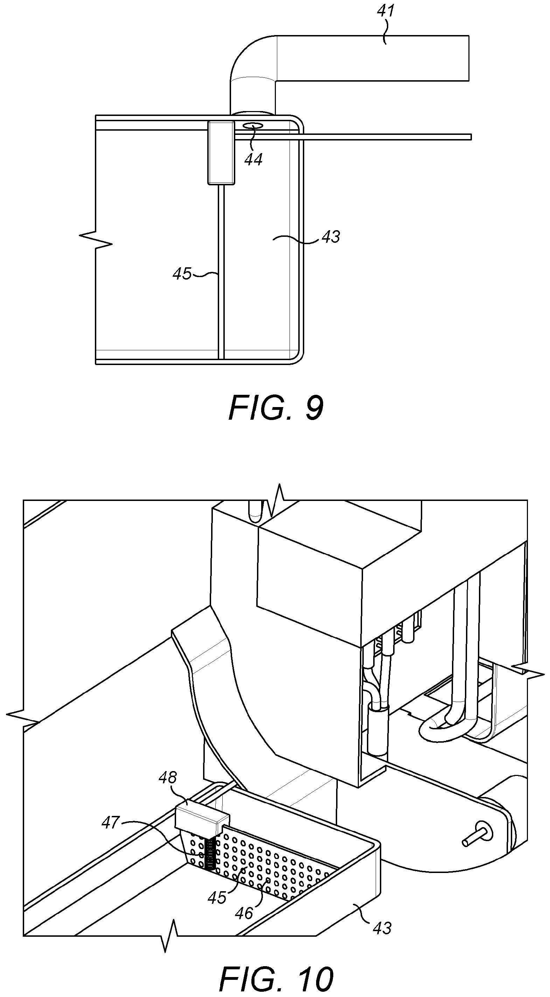

Figures 14 and 14A show an air conditioning unit 60 which is similar to the air conditioning unit 40 as shown in Fig. 10. Rather than having a condensate tray 43 underneath the air conditioning unit, the air conditioning unit 60 in Fig. 14 has a reservoir 50 similar to the reservoir of Figs. 11-13 attached to a condensate outlet 61 from the air conditioning unit 60. The reservoir 50 is effectively the same as that described in Figs. 11-13, except for the orientation of the power line 15" and the outlet 52' which now leads out of the top of the reservoir. A pump (not shown) is provided above in the outlet 52 in order to pump the condensate from the reservoir 50 once the level is high enough. This example can be provided as a retrofit to a conventional air conditioning unit of the type shown in Figs. 8-10 as it does not require modification of the air conditioning unit itself.

## Claims

1. A liquid filter formed of a printed circuit board (8) comprising a plurality of holes (9) forming a filter screen through the printed circuit board;
wherein a first set of capacitive elements (12) are formed in the printed circuit board forming a first capacitive sensor capable of measuring the depth of the liquid adjacent to the filter.

2. A filter according to claim 1, wherein the capacitive elements are shielded (18) on one side such that they measure the depth on one side of the filter.

3. A filter according to claim 1 or claim 2, further comprising a second set of capacitive elements (13) formed on the printed circuit board forming a second capacitive sensor capable of measuring the depth of the liquid adjacent to the filter on a side opposite to the side measured by the first set of capacitive elements (12).

4. A filter according to any preceding claim, wherein the printed circuit board has an array of holes (9) which decrease in size towards the bottom of the printed circuit board.

5. A filter according to any preceding, wherein the printed circuit board (8) is copper-plated in the vicinity of the holes.

6. A condensate (1) tray having a filter according to any preceding claim upstream of an outlet duct.

7. A reservoir (50) having a filter according to any of claims 1 to 5 upstream of an outlet duct.

## Patentansprüche

1. Flüssigkeitsfilter aus einer Leiterplatte (8) gebildet, umfassend eine Vielzahl von Löchern (9), die durch die Leiterplatte hindurch ein Filtersieb bilden;
wobei ein erster Satz kapazitiver Elemente (12) auf der Leiterplatte gebildet ist und einen ersten kapazitiven Sensor bildet, der in der Lage ist, die Tiefe der an den Filter angrenzenden Flüssigkeit zu messen.

2. Filter nach Anspruch 1, wobei die kapazitiven Elemente (18) auf einer Seite so abgeschirmt sind, dass sie die Tiefe auf einer Seite des Filters messen.

3. Filter nach Anspruch 1 oder 2, weiter umfassend einen zweiten Satz kapazitiver Elemente (13), die auf der Leiterplatte gebildet sind und einen zweiten kapazitiven Sensor bilden, der in der Lage ist, die Tiefe der an den Filter angrenzenden Flüssigkeit auf einer Seite zu messen, die der durch den ersten Satz kapazitiver Elemente (12) gemessenen Seite gegenüberliegt.

4. Filter nach einem vorstehenden Anspruch, wobei die Leiterplatte eine Anordnung von Löchern (9) aufweist, deren Größe zum Boden der Leiterplatte hin abnimmt.

5. Filter nach einem vorstehenden Anspruch, wobei die Leiterplatte (8) in der Nähe der Löcher verkupfert ist.

6. Kondensatwanne (1), die ein Filter nach einem vorstehenden Anspruch stromaufwärts eines Auslasskanals aufweist.

7. Reservoir (50), das ein Filter nach einem der Ansprüche 1 bis 5 stromaufwärts eines Auslasskanals aufweist.

## Revendications

1. Filtre à liquide constitué d'une carte de circuit imprimé (8) comprenant une pluralité de trous (9) formant un tamis filtrant à travers la carte de circuit imprimé ;
dans lequel un premier ensemble d'éléments capacitifs (12) est formé dans la carte de circuit imprimé formant un premier capteur capacitif capable de mesurer la profondeur du liquide adjacent au filtre.

2. Filtre selon la revendication 1, dans lequel les éléments capacitifs sont blindés (18) sur un côté de telle sorte qu'ils mesurent la profondeur sur un côté du filtre.

3. Filtre selon la revendication 1 ou la revendication 2, comprenant en outre un second ensemble d'éléments capacitifs (13) formés sur la carte de circuit imprimé formant un second capteur capacitif capable de mesurer la profondeur du liquide adjacent au filtre sur un côté opposé au côté mesuré par le premier ensemble d'éléments capacitifs (12).

4. Filtre selon une quelconque revendication précédente, dans lequel la carte de circuit imprimé présente un réseau de trous (9) dont la taille diminue vers le bas de la carte de circuit imprimé.

5. Filtre selon une quelconque revendication précédente, dans lequel la carte de circuit imprimé (8) est revêtue de cuivre à proximité des trous.

6. Bac à condensats (1) présentant un filtre selon une quelconque revendication précédente en amont d'un conduit de sortie.

7. Réservoir (50) présentant un filtre selon l'une quelconque des revendications 1 à 5 en amont d'un conduit de sortie.
